# FASCICULE DE BREVET EUROPEEN

(11) **EP 1 386 453 B1**
(45) Date de publication et mention de la délivrance du brevet: **13.08.2008**
(21) Numéro de dépôt: 02720069.0
(22) Date de dépôt: 22.03.2002
(51) Int. Cl.: H04L 12/56, H04L 12/28

(54) **PROCEDE DE TRANSMISSION DE DONNEES PAR UNE STATION MOBILE COMPORTANT UNE ETAPE DE DETERMINATION DE LA MDS**
VERFAHREN ZUR DATENÜBERTRAGUNG DURCH EINE MOBILSTATION MIT BESTIMMUNG EINER MAXIMALEN GRÖSSE VON DATAGRAMMEN (MDS)
METHOD FOR DATA TRANSMISSION BY A MOBILE STATION COMPRISING A MAXIMUM DATAGRAM SIZE (MDS) DETERMINATION

(30) Priorité: 09.04.2001 FR 0104828
(43) Date de publication de la demande: 04.02.2004
(73) Titulaire: GEMPLUS, 13420 Gémenos Cedex (FR)
(72) Inventeur: ARQUES, François-Xavier, F-83100 TOULON (FR); CHENE, Gilles, F-13011 MARSEILLE (FR)
(86) Numéro de dépôt international: PCT/FR2002/001012
(87) Numéro de publication internationale: WO 2002/082748

(56) Documents cités:
- US-A- 5 425 023
- US-A- 5 809 254
- US-B1- 6 185 218

## Description

La présente invention concerné un procédé de transmission de -données en mode non connecté par une station mobile comportant une étape de détermination de la taille maximale de transmission de paquets de données, connue sous le terme de MDS pour Maximum Datagram Size en anglais (ou MMDS pour Mobile MDS).

Le document US-A-5425023 divulgue une méthode de gestion du MTU (Maximum Transfert Unit) dans un réseau filaire TCP/IP.

L'invention concerne le domaine des communications faites à partir d'une station mobile dans le cadre de la norme GSM. Une telle station mobile est composée d'un équipement mobile et d'une carte à puce connue sous le nom de carte SIM (pour Subscriber Identification Module). L'équipement mobile peut être un téléphone, un assistant digital personnel (PDA pour Personal Digital Assistant an anglais) ou autre.

Les communications en cause dans le cadre de la présente invention peuvent être des communications entre deux stations mobiles ou entre une station mobile et un serveur distant apte à communiquer avec une telle station mobile, comme par exemple une passerelle de communication plus connue sous le terme de serveur OTA (Over The Air en anglais).

La connaissance exacte de la MDS peut s'avérer d'une grande importance dans le cadre d'un protocole de communication à partir d'une station mobile car les couches de transport utilisées dans ce type de protocole ne sont généralement pas fiables. Ces couches de transport peuvent en effet rejeter des messages trop long sans envoyer de message d'erreur ou segmenter des messages en plusieurs paquets de données sans garantir leur rassemblement correct. Dans le cadre d'une telle communication à partir d'une station mobile, il est donc important de ne transmettre que des messages de longueur inférieure ou égale à la MDS pour éviter tout risque de segmentation ou de rejet.

Dans un premier temps, il est nécessaire de donner un certain nombre de définitions et de préciser le fonctionnement de certains protocoles de communication à partir d'une station mobile.

Les protocoles de communication notamment utilisés dans un contexte de communication sans fil (mode non connecté) sont la suite de protocoles WAP (pour Wireless Application Protocol) qui régissent les transmissions de données entre des stations mobiles et une passerelle distante (généralement appelée Passerelle WAP ou WAP Gateway).

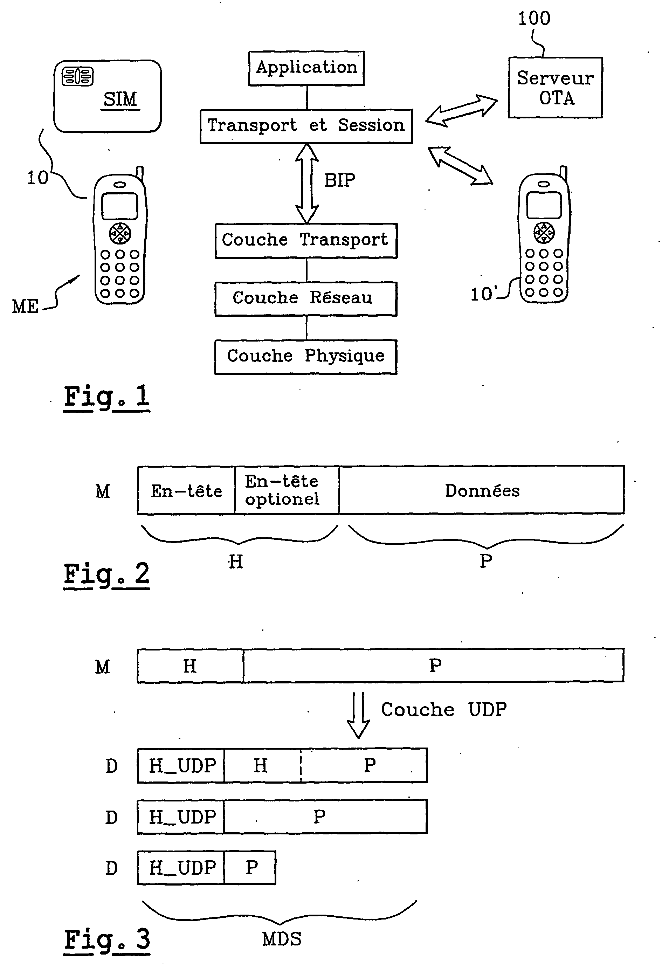

La figure 1 décrit schématiquement la communication au sein d'une station mobile 10 composée d'un équipement mobile ME, un téléphone dans l'exemple, et d'une carte à puce SIM. La station mobile 10 peut communiquer avec une autre station mobile 10' ou avec un serveur distant 100. La carte SIM permet de procurer une identification d'abonné et une clé afin de permettre d'une part l'authentification de l'abonné sur le réseau GSM, et d'autre part le (dé) cryptage des données (reçues) envoyées. La carte SIM permet en outre à l'abonné d'accéder à des données propres au réseau GSM ainsi qu'à des informations sur les services accessibles.

Dans l'exemple considéré, la communication entre la carte SIM et l'équipement mobile ME est régie selon le protocole BIP (Bearer Independant Protocol) qui est une option du standard ETSI « GSM 11. 14 » décrivant le SIM Tool Kit (SKT) et qui définit un ensemble de commandes et de situations. Le protocole BIP permet à la carte SIM d'utiliser les moyens de communication de l'équipement mobile ME quelque soit la technologie de communication utilisée.

Les protocoles de communication sont généralement tous organisés en plusieurs couches superposées. Une configuration classique consiste dans une couche réseau qui repose sur une couche physique et de liaison et qui supporte une couche de transport, d'autres couches pouvant être ajoutées, telles que des couches de sécurité, de transaction, de session, d'application ou autre, selon les protocoles considérés.

La couche réseau la plus couramment utilisée est configurée selon le protocole IP (Internet Protocol). Cette couche réseau IP gère l'interface entre l'architecture physique de transmission et les couches supérieures, elle assure essentiellement une fonction d'acheminement de paquets de données (connus aussi sous le terme de datagrammes) jusqu'au destinataire, cette fonction étant également connue sous le terme de routeur. Le protocole IP n'est pas fiable en cas de perte, de détérioration ou de duplication de paquets de données : à savoir que la remise des datagrammes n'est pas garantie. C'est généralement aux couches supérieures de gérer ce genre de situations.

La couche de transport permet un transfert complet des données. Il existe essentiellement deux protocoles de configuration de la couche de transport. Le protocole TCP (Transmission Control Protocol), en tant que protocole de mode connecté, garantit l'intégrité et la fiabilité des transmissions de données. Les protocoles UDP (User Datagram Protocol) ou WDP (WAP Datagram Protocol) en revanche sont des protocoles de mode non connecté et ne sont pas considérés comme fiables car ils ne garantissent pas le contrôle du transfert des données. Du fait de leur simplicité, ils ont cependant l'avantage de permettre une transmission rapide. Ces protocoles de transport UDP ou WDP agissent comme de simples multiplexeur/démultiplexeur de paquets de données. Ces deux protocoles de transport sont très proches dans leurs caractéristiques, voire identiques dans le cas de certains types de liaison (GPRS, CSD).

La MDS est une restriction de la couche de transport (de la couche UDP par exemple) du nombre maximal d'octets de données pouvant être acceptés dans la transmission d'un seul paquet de données (un datagramme). Si un message comporte plus d'octets que la taille de la MDS, la couche de transport le détruit sans le transmettre aux couches supérieures ou le segmente en une pluralité de paquets de données que le récepteur ne sait pas reconstituer.

Le rejet des messages doit évidemment être évité. De même, la segmentation des messages doit également être évitée autant que faire ce peut, en particulier dans le cas où le protocole UDP est utilisé pour la couche de transport. En effet, la segmentation entraîne souvent des pertes de données sans que les couches émettrices en soient avisées.

Il est donc préférable pour la carte SIM de ne transmettre que des messages suffisamment courts pour éviter leur segmentation (ou leur rejet) par la couche de transport de l'équipement mobile ME hôte. La connaissance de la MDS devient alors importante pour utiliser au maximum les capacités de la couche de transport sans risquer d'aliéner les données transmises. Si les informations à transmettre sont plus importantes que celles pouvant être contenues dans un seul message, il est nécessaire pour la carte SIM de former un bloc de données (data block) composé de plusieurs messages M.

La figure 2 illustre la structure d'un message M. Chaque message M comporte un en-tête H et des informations P (ou payload en anglais). L'en-tête H est nécessaire pour indiquer la longueur du message et sa composition (par exemple une requête de détermination de la MDS). D'autres informations peuvent naturellement être inscrites dans l'en-tête H selon les fonctionnalités offertes par le protocole de messages considéré (par exemple sa position avec d'autres messages dans un bloc, la nécessité d'un accusé de réception, ou autre). La longueur de l'en-tête H est minimisée pour permettre un maximum de transfert d'information P. Ainsi, un en-tête optionnel peut être prévu en cas de paramètres supplémentaires à transmettre.

La figure 3 illustre le principe de la segmentation d'un message M par la couche de transport UDP. Le message M va être découpé en une pluralité de paquets de données D (datagrammes) à la taille de la MDS. Chaque paquet D comporte alors un en-tête qui ne permet pas, arrivé à destination, de l'assembler avec les autres paquets pour reconstituer le message M. Cette reconstitution n'est en effet pas garantie par le protocole UDP de la couche de transport.

La connaissance de la MDS est donc importante dans le cadre de communications avec des stations mobiles utilisant le protocole UDP pour configurer la couche de transport de l'équipement mobile.

L'objectif de l'invention est de proposer un procédé de transmission de données en mode non connecté incluant une étape de détermination de la taille de la MDS afin d'éliminer tout risque d'aliénation ou de rejet des données transmises.

L'invention concerne plus spécifiquement un procédé de transmission de données selon un protocole de communication à partir d'une station mobile composée d'une carte à puce (SIM) associée à un équipement mobile hôte, ledit protocole étant organisé en plusieurs couches dont au moins une couche de transport de données de type datagramme apte à transmettre intégralement des paquets de données d'une taille maximale (Maximum Datagram Size, MDS), caractérisé en ce que ledit procédé de transmission comporte une étape consistant, pour la carte (SIM), à déterminer la valeur de ladite taille maximale des paquets de données (MDS) pouvant être intégralement transmis par la couche de transport de son équipement mobile hôte.

Selon un premier mode de réalisation, la valeur de la taille maximale des paquets de données (MDS) est fournie à la carte (SIM) directement par son équipement mobile hôte

Selon un second mode de réalisation, la valeur de la taille maximale des paquets données (MDS) est déterminée par la carte (SIM) à partir de la transmission d'au moins un message échangé entre la carte de la station mobile et une entité de calcul, lesdits messages étant de longueurs distinctes lorsque leur nombre est supérieur ou égale à deux.

Selon une caractéristique, la détermination de la valeur de la taille maximale des paquets de données (MDS) par une entité de calcul est déterminée par les étapes suivantes :
- émission de N messages par la carte SIM comportant chacun un en-tête spécifique indiquant au moins une requête de détermination - de la taille maximale des paquets de données (MDS) ;
- filtrage, par la couche de transport de l'équipement mobile, des messages de longueur inférieure ou égale à la taille maximale des paquets.de données (MDS)
- réception desdits messages filtrés ayant conservé l'en-tête spécifique d'origine et calcul de leur longueur respective par l'entité de calcul ;
- émission desdites longueurs calculées à destination de la carte de la station mobile ;
- détermination de la valeur de ladite taille maximale des paquets de données (MDS) par la carte (SIM) par comparaison desdites longueurs calculées.

Selon les mode de réalisation, l'entité de calcul est incluse dans la carte à puce ou dans un serveur distant apte à communiquer avec la station mobile.

Selon un mode de réalisation, le filtrage de la couche de transport consiste à rejeter les messages de longueur excédant la taille maximale des paquets de données (MDS).

Selon un autre mode de réalisation, le filtrage de la couche de transport consiste à segmenter les messages de longueur excédant la taille maximale des paquets de données (MDS) en une pluralité de paquets de données dont un seul conserve l'en-tête spécifique du message d'origine.

Selon une caractéristique, le protocole de la couche de transport est le protocole UDP (User Datagram rotocol).

La présente invention concerne également une carte à puce (SIM) apte à coopérer avec un équipement mobile hôte pour une communication selon un protocole organisé en plusieurs couches dont au moins une couche de transport de données de type datagramme apte à transmettre intégralement des paquets de données d'une taille maximale (Maximum Datagram Size, MDS), caractérisé en ce que ladite carte (SIM) comporte des moyens aptes à extraire la valeur de ladite taille maximale des paquets de données (MDS) pouvant être intégralement transmis par la couche de transport de son équipement mobile hôte.

Les particularités et avantages de l'invention apparaîtront clairement à la lecture de la description qui suit, faite à titre d'exemple illustratif et non limitatif et en regard aux figures annexées sur lesquels :
- la figure 1, déjà décrite, illustre l'interface entre une carte SIM un une station mobile ;
- la figure 2, déjà décrite, est un schéma d'un exemple de la structure d'un message à transmettre ;
- la figure 3, déjà décrite, illustre le principe de la segmentation d'un message par la couche de transport ;
- la figure 4 est un schéma d'un premier mode de mise en oeuvre du procédé selon l'invention ;
- la figure 5 est un schéma d'un deuxième mode de mise en oeuvre du procédé selon l'invention ;

L'objectif de la présente invention est de déterminer la valeur de la taille maximale des paquets de données pouvant être transmis par la couche de transport d'un équipement mobile. Dans la suite, on désignera par MDS cette valeur à déterminer. La carte SIM doit se procurer cette valeur de la MDS pour permettre une télécommunication fiable entre deux stations mobiles ou entre une station mobile et un serveur distant.

Cette information sur la valeur de la MDS, qui est propre à chaque équipement mobile hôte, peut être fournie ou déterminée à n'importe quel moment de l'utilisation de la station mobile. La carte SIM comporte ainsi des moyens aptes à déterminer cette valeur de la MDS. et peut ensuite en conserver la mémoire, en particulier tant qu'elle ne détecte pas de changement de son équipement hôte.

Selon un premier mode de réalisation, la valeur de la MDS est fournie à la carte SIM directement par son équipement mobile hôte, par exemple lors de la mise sous tension de la station mobile, via une commande compatible avec la norme du SKT, par exemple la commande TERMINAL PROFILE.

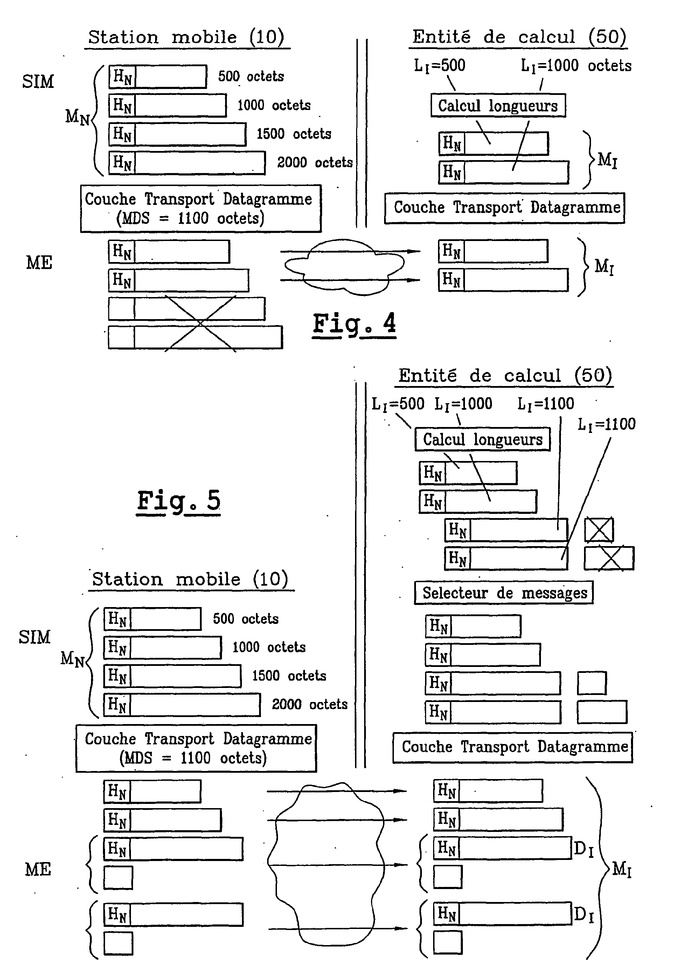

Selon un second mode de réalisation, la valeur de la MDS est déterminée par calcul. Les figures 4 et 5 illustrent les échanges de données entre une station mobile 10 et une entité de calcul 50 dans le cadre d'une détermination de la valeur de la MDS. Selon les applications, l'entité de calcul 50 peut être un serveur distant apte à communiquer avec une station mobile (comme un serveur OTA cité précédemment) ou la station mobile elle même ou une autre station mobile.

En effet, pour permettre le calcul de la MDS, il est nécessaire que des messages traversent la couche de transport, peu importe quel soit le destinataire desdits messages. L'entité de calcul 50 peut donc être située dans la carte SIM elle même sous forme d'une application par exemple, la carte SIM émettant des messages de rebouclage sur l'adresse de son équipement mobile hôte (adresse du type 127.xxx dans le cadre du protocole IP).

La couche de transport ne peut pas transmettre de message dont la longueur est supérieure à sa MDS. Lorsque ce cas de figure se présente, la couche de transport rejette les messages trop longs (figure 4) ou les segmente (figure 5). Dans le cas de la segmentation, au moins un paquet de données segmenté sera à la taille de la MDS.

Selon l'invention, la détermination de la valeur de la MDS est obtenue par les étapes suivantes :

La station mobile 10 va émettre une pluralité de N messages M_{N} de longueur différente, prédéfinie ou non, à destination de l'entité de calcul 50.

Selon les applications, N peut être égal à 1, c'est à dire qu'un seul message M est transmis entre la carte SIM de la station mobile 10 et l'entité de calcul 50. Dans ce cas, le message M est choisi de grande longueur afin qu'il soit certainement segmenté par la couche de transport de l'équipement mobile ME.

Préférentiellement, une pluralité de messages M_{N} sont échangés, avec N pouvant être fixé entre 2 et 6, voire plus si nécessaire, selon les performances et/ou capacités de la carte SIM.

L'en-tête H_{N} de chaque message M_{N} doit comporter des informations devant permettre et faciliter le calcul de la MDS. En particulier, l'en-tête H_{N} doit contenir l'information selon laquelle le message est une requête de calcul de la MDS ainsi qu'éventuellement un autre champ C dont les octets ne peuvent être tous égaux à OxFF (c'est à dire tous les bits à '1'). L'information utile (payload) de ces messages M_{N} est en revanche fixée avec tous les bits à '1', c'est à dire tous les octets à OxFF.

Comme illustré sur les figures 4 et 5, la couche de transport filtre les messages M_{I} dont la longueur est inférieure ou égale à sa MDS pour les transmettre intégralement et rejette ou segmente les autre.

L'entité de calcul 50 réceptionne des messages M_{I} ayant traversé la couche de transport de l'équipement mobile ME émetteur et sélectionne ceux qui ont conservé leur en-tête H_{N} d'origine comportant la requête de détermination de la MDS.

Dans le cas du rejet des messages trop longs (figure 4) tous les messages M_{I} transmis ont conservé leur en-tête d'origine H_{N} alors que dans le cas de la segmentation des messages trop longs (figure 5), seul un paquet D_{I} de chaque message segmenté a conservé l' en-. tête H_{N} du message d'origine et ce paquet D_{I} a la longueur de la MDS recherchée. En particulier, si un message réceptionné comporte un champ C avec un octet à OxFF, il doit être rejeté car il constitue le « surplus» d'un message d'origine M_{N} segmenté.

Pour chaque message reçu M_{I}, l'unité de calcul 50 va alors calculer une MDS correspondante comme étant la longueur L_{I} dudit message reçu M_{I}. L'entité de calcul 50 va ensuite émettre ces longueurs L_{I} calculées correspondant aux messages M_{I} reçus à destination de la carte SIM qui va comparer ces longueurs L_{I} et conserver la plus grande valeur. La carte SIM de la station mobile peut alors adapter la longueur de ses messages ultérieurs à la longueur de la MDS pour une communication fiable.

Dans le cas d'une communication entre une station mobile et un serveur distant, ledit serveur peut détecter une anomalie de la MDS s'il reçoit un message dont la longueur n'est pas celle indiquée dans l'en-tête dudit message. Il peut alors alerter la carte SIM de la station mobile afin qu'elle initie une (nouvelle) détermination de la MDS.

## Revendications

1. Procédé de transmission de données selon un protocole de communication à partir d'une station mobile (10) composée d'une carte à puce (SIM) associée à un équipement mobile (ME) hôte, ledit protocole étant organisé en plusieurs couches dont au moins une couche de transport de données de type datagramme apte à transmettre intégralement des paquets de données (D) d'une taille maximale, Maximum Datagram Size, appelée MDS, **caractérisé en ce que** ledit procédé de transmission comporte une étape consistant, pour la carte (SIM), à déterminer la valeur de ladite taille maximale des paquets de données MDS pouvant être intégralement transmis par la couche de transport de son équipement mobile hôte (ME).

2. Procédé de transmission selon la revendication 1, **caractérisé en ce que** la valeur de la taille maximale des paquets de données MDS, est indiquée à la carte (SIM) directement par son équipement mobile hôte (ME).

3. Procédé de transmission selon la revendication 1, **caractérisé en ce que** la valeur de la taille maximale des paquets données MDS, est déterminée par la carte (SIM) à partir de la transmission d'au moins un (N≥1) message (M_{N}) échangé entre la carte (SIM) de la station mobile (10) et une entité de calcul (50), lesdits messages (M_{N}) étant de longueurs distinctes lorsque leur nombre est supérieur ou égale à deux (N≥2).

4. Procédé de transmission selon la revendication 3, **caractérisé en ce que** la valeur de la taille maximale des paquets de données, MDS, est déterminée par les étapes suivantes :
- émission de N messages (M_{N}) par la carte (SIM) comportant chacun un en-tête (H_{N}) spécifique indiquant au moins une requête de détermination de la taille maximale des paquets de données (MDS) ;
- filtrage, par la couche de transport de l'équipement mobile (ME), des messages (M_{I}) de longueur inférieure ou égale à la taille maximale des paquets de données MDS;
- réception desdits messages filtrés (M_{I}) ayant conservé l'en-tête spécifique d'origine (H) et calcul de leur longueur respective (L_{I}) par l'entité de calcul (50) ;
- émission desdites longueurs calculées (L_{I}) à destination de la carte (SIM) de la station mobile (10) ;
- détermination de la valeur de ladite taille maximale des paquets de données, MDS, par la carte (SIM) par comparaison desdites longueurs calculées (L_{I}).

5. Procédé de transmission selon les revendications 3 à 4, **caractérisé en ce que** l'entité de calcul (50) est incluse dans la carte à puce (SIM).

6. Procédé de transmission selon les revendications 3 à 4, **caractérisé en ce que** l'entité de calcul (50) est incluse dans un serveur distant (100) apte à communiquer avec la station mobile (10).

7. Procédé de transmission selon la revendication 6, **caractérisé en ce que** le serveur (100) est une passerelle de communication OTA, Over The Air.

8. Procédé de transmission selon la revendication 4, **caractérisé en ce que** le filtrage de la couche de transport de l'équipement mobile (ME) hôte consiste à rejeter les messages de longueur excédant la taille maximale des paquets de données, MDS.

9. Procédé de transmission selon la revendication 4, **caractérisé en ce que** le filtrage de la couche de transport de l'équipement mobile (ME) hôte consiste à segmenter chaque message de longueur excédant la taille maximale des paquets de données, MDS, en une pluralité de paquets de données (D_{I}) dont un seul conserve l'en-tête spécifique (H_{N}) du message d'origine (M_{N}).

10. Procédé selon l'une quelconque des revendications précédentes, **caractérisé en ce que** le protocole de la couche de transport est le protocole UDP, User Datagram Protocol.

11. Procédé selon l'une quelconque des revendications 1 à 10, **caractérisé en ce que** la station mobile (10) est un téléphone cellulaire.

12. Procédé selon l'une quelconque des revendications 1 à 10, **caractérisé en ce que** la station mobile (10) est un assistant digital personnel (PDA).

13. Carte à puce (SIM) apte à coopérer avec un équipement mobile hôte (ME) pour une communication selon un protocole organisé en plusieurs couches dont au moins une couche de transport de données de type datagramme apte à transmettre intégralement des paquets de données (D) d'une taille maximale, Maximum Datagram Size, appelée MDS, **caractérisé en ce que** ladite carte (SIM) comporte des moyens aptes à extraire la valeur de ladite taille maximale des paquets de données, MDS, pouvant être intégralement transmis par la couche de transport de son équipement mobile hôte (ME).

## Claims

1. A method for transmitting data according to a communication protocol from a mobile station (10) made up of a chip card (SIM) associated with a host mobile equipment (ME), said protocol being designed in several layers, one of which at least is a data transportation layer of the datagram type, able to fully transmit datagrams (D) of a maximum size (Maximum Datagram Size, also called MDS), **characterised in that** said transmission method includes a step consisting, for the chip card (SIM), in determining the value of said maximum size MDS of the datagrams which can be fully transmitted by the transportation layer of its host mobile equipment (ME).

2. A transmission method according to claim 1, **characterised in that** the chip card (SIM) is directly informed of the value of the maximum datagram size MDS through its host mobile equipment (ME).

3. A transmission method according to claim 1, **characterised in that** the value of the maximum datagram size MDS is determined by the chip card (SIM) from the transmission of at least one (N≥1) message (M_{N}) exchanged between the chip card (SIM) of the mobile station (10) and a computation entity (50), said messages (M_{N}) having a distinct length when their number is greater than or equal to two (N≥2).

4. A transmission method according to claim 3, **characterised in that** the value of the maximum datagram size MDS is determined by the following steps:
- emission of N messages (M_{N}) by the chip card (SIM), each including a specific header (H_{N}) mentioning at least one request for determining the maximum datagram size MDS;
- filtering, through the transportation layer of the mobile equipment (ME), messages (M_{I}) having a length lower than or equal to the maximum datagram size MDS;
- receiving said filtered messages (M_{I}) still having the original specific header (H) and computation of the respective length thereof (L_{I}) using the computation entity (50);
- emission of said computed length (L_{I}) to the chip card (SIM) of the mobile station (10);
- determining the value of said maximum datagram size MDS using the chip card (SIM) by comparing said computed lengths (L_{I}).

5. A transmission method according to claims 3 to 4, **characterised in that** the computation entity (50) is included in the chip card (SIM).

6. A transmission method according to claims 3 to 4, **characterised in that** the computation entity (50) is included in a distant server (100) capable of communicating with the mobile station (10).

7. A transmission method according to claim 6, **characterised in that** the server (100) is an OTA (Over The Air) communication gateway.

8. A transmission method according to claim 4, **characterised in that** the filtering of the transportation layer of the host mobile equipment (ME) consists in rejecting the messages, the length of which exceeds the maximum datagram size MDS.

9. A transmission method according to claim 4, **characterised in that** the filtering of the transportation layer of the mobile equipment (ME) of a host consists in partitioning each message the length of which exceeds the maximum datagram size MDS into a plurality of datagrams (D_{I}) only one of which keeps the specific header (H_{N}) of the original message (M_{N}).

10. A method according to any one of the preceding claims, **characterised in that** the protocol of the transportation layer is the User Datagram Protocol.

11. A method according to any one of the claims 1 to 10, **characterised in that** the mobile station (10) is a cell phone.

12. A method according to any one of claims 1 to 10, **characterised in that** the mobile station (10) is a personal digital assistant (PDA).

13. A SIM card able to cooperate with a host mobile equipment (ME) for a communication according to a protocol designed in several layers at least one of which is a data transportation layer able to transmit datagrams (D) having a maximum size (Maximum Datagram Size, also called MDS), **characterised in that** said chip card (SIM) includes means able to retrieve the value of said maximum datagram size MDS which can fully be transmitted by the transportation layer of its host mobile equipment (ME).

## Patentansprüche

1. Datenübertragungsverfahren gemäß einem Kommunikationsprotokoll ausgehend von einer mobilen Station (10), die aus einer einer mobilen Wirtsvorrichtung (ME) zugeordneten Chipkarte (SIM) gebildet wird, wobei das genannte Protokoll in mehreren Schichten organisiert ist, von denen wenigstens eine Datentransportschicht vom Typ Datagramm geeignet ist, Datenpakete (D) von einer maximalen Größe Maximum Datagramm Size, genannt MDS, vollständig zu übertragen, **dadurch gekennzeichnet, dass** das genannte Übertragungsverfahren eine Stufe umfasst, die für die Karte (SIM) in der Bestimmung des Wertes der genannten maximalen Größe der Datenpakete MDS besteht, die durch die Transportschicht ihrer mobilen Wirtsausrüstung (ME) vollständig übertragen werden können.

2. Übertragungsverfahren gemäß Anspruch 1,
**dadurch gekennzeichnet, dass** der Wert der maximalen Größe der Datenpakete MDS der Karte (SIM) direkt durch ihre mobile Wirtsausrüstung (ME) angezeigt wird.

3. Übertragungsverfahren gemäß Anspruch 1,
**dadurch gekennzeichnet, dass** der Wert der maximalen Größe der Datenpakete MDS durch die Karte (SIM) ausgehend von der Übertragung von wenigstens einer (N≥1) Meldung (M_{N}) bestimmt wird, die zwischen der Karte (SIM) der mobilen Station (10) und einer Berechnungseinheit (50) ausgetauscht wird, wobei die genannten Meldungen (M_{N}) von unterschiedlicher Größe sind, wenn ihre Anzahl größer als oder gleich zwei ist (N≥2).

4. Übertragungsverfahren gemäß Anspruch 3,
**dadurch gekennzeichnet, dass** der Wert der maximalen Größe der Datenpakete MDS durch die folgenden Stufen bestimmt wird:
- Ausgabe von N Meldungen (M_{N}) durch die Karte (SIM), die jeweils eine spezifische Kopfzeile (H_{N}) umfassen, die wenigstens eine Bestimmungsanfrage der maximale Größe der Datenpakete (MDS) anzeigt;
- Filtern der Meldungen (M_{I}) mit einer geringeren oder gleichen als / wie der maximalen Größe der Datenpakete MDS durch die Transportschicht der mobilen Ausrüstung (ME);
- Empfang der genannten gefilterten Daten (M_{I}), die die spezifische Originalkopfzeile (H) beibehalten haben und Berechnung ihrer jeweiligen Länge (L_{I}) durch die Berechnungseinheit (50);
- Ausgabe der genannten für die Karte (SIM) der mobilen Station (10) bestimmten berechneten Längen (L I) ;
- Bestimmung des Wertes der genannten maximalen Größe der Datenpakete MDS durch die Karte (SIM) per Vergleich der genannten berechneten Längen (L_{I}).

5. Übertragungsverfahren gemäß Anspruch 3 bis 4, **dadurch gekennzeichnet, dass** die Berechnungseinheit (50) in der Chipkarte (SIM) inbegriffen ist.

6. Übertragungsverfahren gemäß Anspruch 3 bis 4, **dadurch gekennzeichnet, dass** die Berechnungseinheit (50) in einem entfernten Server (100) inbegriffen ist, der geeignet ist, mit der mobilen Station (10) zu kommunizieren.

7. Übertragungsverfahren gemäß Anspruch 6,
**dadurch gekennzeichnet, dass** der Server (100) eine Kommunikationsbrücke OTA, Over The Air, ist.

8. Übertragungsverfahren gemäß Anspruch 4,
**dadurch gekennzeichnet, dass** das Filtern der Transportschicht der mobilen Wirtsausrüstung (ME) im Abweisen der Meldungen mit einer Länge besteht, die die maximale Größe der Datenpakete MDS übersteigt.

9. Übertragungsverfahren gemäß Anspruch 4,
**dadurch gekennzeichnet, dass** das Filtern der Transportschicht der mobilen Wirtsausrüstung (ME) in der Segmentierung jeder Meldung mit einer Länge besteht, die die maximale Größe der Datenpakete (MDS) übersteigt, in eine Vielzahl von Datenpaketen (D_{I}), von denen nur eine einzige die spezifische Kopfzeile (H_{N}) der Originalmeldung (M_{N}) beibehält.

10. Verfahren gemäß einem der vorherigen Ansprüche, **dadurch gekennzeichnet, dass** das Protokoll der Transportschicht das Protokoll UDP, User Datagram Protocol, ist.

11. Verfahren gemäß Anspruch 1 bis 10, **dadurch gekennzeichnet, dass** die mobile Station (10) ein Zelltelefon ist.

12. Verfahren gemäß Anspruch 1 bis 10, **dadurch gekennzeichnet, dass** die mobile Station (10) ein persönlicher digitaler Assistent (PDA) ist.

13. Chipkarte (SIM), die geeignet ist, mit einer mobilen Wirtsausrüstung (ME) zwecks einer Kommunikation gemäß einem Protokoll zusammenzuwirken, das in mehreren Schichten organisiert ist, davon wenigstens eine Datentransportschicht vom Typ Datagramm, die geeignet ist, Datenpakete (D) einer maximalen Größe Maximum Datagam Size, genannt MDS, vollständig zu übertragen, **dadurch gekennzeichnet, dass** die genannte Karte (SIM) Mittel umfasst, die geeignet sind, den Wert der genannten maximalen Größe der Datenpakete MDS zu extrahieren, die vollständig durch die Transportschicht ihrer mobilen Wirtsausrüstung (ME) übertragen zu werden.
